# EUROPÄISCHE PATENTSCHRIFT

(11) **EP 0 925 674 B1**
(45) Veröffentlichungstag und Bekanntmachung des Hinweises auf die Patenterteilung: **17.08.2005**
(21) Anmeldenummer: 97937410.5
(22) Anmeldetag: 29.07.1997
(51) Int. Cl.: H04L 29/06, H04L 12/40, B60R 16/02

(54) **VERFAHREN ZUR KONTROLLE DER VERBINDUNGEN EINES ÜBERTRAGUNGSSYSTEMS UND KOMPONENTE ZUR DURCHFÜHRUNG DES VERFAHRENS**
PROCESS AND COMPONENTS FOR CONTROLLING THE CONNECTIONS OF A TRANSMISSION SYSTEM
PROCEDE DE CONTROLE DES LIAISONS D'UN SYSTEME DE TRANSMISSION ET COMPOSANTS CORRESPONDANTS

(30) Priorität: 12.09.1996 DE 19637312
(43) Veröffentlichungstag der Anmeldung: 30.06.1999
(73) Patentinhaber: ROBERT BOSCH GMBH, 70442 Stuttgart (DE)
(72) Erfinder: RODE, Detlef, D-30966 Hemmingen (DE); PASCH, Hans-Lothar, D-31139 Hildesheim (DE); ZURMÜHL, Uwe, D-31180 Giesen (DE)
(86) Internationale Anmeldenummer: PCT/DE1997/001593
(87) Internationale Veröffentlichungsnummer: WO 1998/011700

(56) Entgegenhaltungen:
- EP-A- 0 511 794
- DE-A- 3 506 118
- DE-A- 4 131 133
- US-A- 4 987 317
- US-A- 5 448 561
- HEINTZ F ET AL: "ADVANCED ENGINEERING MEASUREMENT AND INFORMATION SYSTEMS OF FUTURE VEHICLE WIRING SYSTEMS - MULTIPLEX" PROCEEDINGS OF THE INSTITUTION OF MECHANICAL ENGINEERS, 1.Januar 1989, Seiten 213-222, XP000565319

## Beschreibung

### Stand der Technik

Die Erfindung geht aus von einem Verfahren zur Kontrolle von Verbindungen eines Übertragungssystem nach der Gattung des unabhängigen Anspruch sowie Vorrichtungen für die Durchführung des Verfahrens nach dem unabhängigen Anspruch.

Für vernetzte Informationssysteme, insbesondere in einem Kraftfahrzeug werden neben einem Bedienteil (z. B. das klassische Autoradio) Komponenten wie beispielsweise Navigationsgeräte, CD-Changer oder Telefon eingesetzt.
Bei komplexen vernetzten Systemen besteht generell die Notwendigkeit, geeignete Verfahren für die reibungslose Kommunikation zwischen allen Komponenten zu spezifizieren. Das Kommunikationssystem ist dabei von der eigentlichen Applikation getrennt und besitzt beispielsweise eine Struktur gemäß dem OSI-Modell der ISO.

Aus der EP 511 794 ist ein System bekannt, bei dem eine ausgezeichnete Station ("Master") die Verbindung zu den anderen Stationen ("Slave"s) aufbaut und beendet. Der "Master" fordert nach seiner Aktivierung oder einem Reset alle "Slave"s durch ein Signal auf, die Verbindung aufzubauen.
Bei den meistens einfachen "Master"-"Slave" Systemen ist eine Kommunikation zwischen "Slave"s nicht direkt, sondern nur über den "Master" möglich. Dieses belastet das gesamte Bussystem, über das übertragen wird, und erfordert große Rechenkapazität des "Master"s für das Weiterreichen der Nachrichten.

### Vorteile der Erfindung

Das erfindungsgemäße Verfahren mit den kennzeichnenden Merkmalen des unabhängigen Anspruchs hat demgegenüber den Vorteil, daß eine logische Punkt-zu-Punkt-Verbindung zwischen Komponenten möglich ist, ohne daß die Informationen über eine ausgezeichnete Station laufen müssen. Dadurch wird die direkte Versendung von Nachrichten zwischen zwei Komponenten ermöglicht. Ein Weiterreichen von Nachrichten über den "Master", wie es beispielsweise bei einem einfachen "Master"-"Slave" System für die Kommunikation zwischen zwei "Slave"s benötigt wird, kann entfallen. Der Verbindungsaufbau kann von jeder Komponente angestoßen werden. Die Definition der Funktion der Komponente ist für den Verbindungsaufbau nicht von Bedeutung, sondern für die Aufrechterhaltung der Verbindung. Die Definiton muß aber vorab für alle Komponenten festgelegt werden.
Insbesondere weitere Komponenten lassen sich nach dem Verfahren leicht zu einem bestehenden System hinzufügen, sogar während des laufenden Betriebs.

Die Belastung für die Übertragungsleitung durch das Netzwerkmanagement ist als recht gering anzusehen.

Durch die in den Unteransprüchen aufgeführten Maßnahmen ist eine vorteilhafte Weiterbildung und Verbesserung des Verfahrens möglich.
Die Definiton der Komponenten, die vorab festgelegt wird, ist für die Aufrechterhaltung der Verbindung von Bedeutung. Kommmt der Anstoß zum Verbindungsaufbau von einer Komponente, der durch Definition die Überwachungs- und Terminierungsfunktion für diese Verbindung zugeordnet wurde, wird diese Komponente die Verbindung vorteilhafterweise weiterhin aufrechterhalten.
Genausogut kann der Anstoß zum Verbindungsaufbau von einer Komponente kommen, der durch die Definiton keine Überwachungs- und Terminierungsfunktionen für diese Verbindung zugeordnet sind. In diesem Fall übernimmt die logische Komponente die weitere Aufrechterhaltung der Verbindung, der die Funktionen für diese Verbindung zugeordnet sind.
Aufgrund der hierarchischen Struktur ist es möglich, eine Aufteilung in mehrere Systeme vorzunehmen, die aus jeweils einem (Verbindungs-) "Master" mit den ihm zugeordneten (Verbindungs-) "Slave"s bestehen. Hierbei ist es zum einen möglich, ein solches Subsystem "stand-alone", also ohne alle übrigen Komponenten zu betreiben. Zum anderen lassen sich weitgehend autonome Teilnetze realisieren, die vom gesamten Datenverkehr und Netzwerkmanagement her nahezu ohne gegenseitige Beeinflussung "koexistieren".

Vorteilhafterweise wird der Verbindungsaufbau durch das Versenden von Kennungen initialisiert.

Um die logischen Verbindungen aufrechtzuerhalten, werden vorteilhafterweise zyklische Telegramme ausgesendet. Um die physikalischen Verbindungen zu überprüfen, ist ein Versenden von Test-Telegrammen vorteilhaft.

Die erfindungsgemäße Komponente mit den kennzeichenden Merkmalen des unabhängigen Anspruchs hat den Vorteil, daß die Komponente ein Programm aufweist, das es ihr ermöglicht, sowohl als Nebenkomponente in einer Verbindung als auch als Hauptkomponente in einer anderen Verbindung aufzutreten.

Vorteilhafterweise werden die Konfigurationsdaten des Systems in nichtflüchtigen Speichern hinterlegt, da so das gesamte Netz nach einem Neustart schneller aufgebaut werden kann. Die Speicherung von Konfigurationsdaten kann auch für die Fehlererkennung und -eingrenzung verwendet werden.

Die Komponenten weisen Schaltungen auf, die eine Reduzierung des Betriebszustands z.B. in den Sleep Mode erlauben. Dieser Betriebszustand wird dann erreicht, wenn das zyklische Telegramm der Hauptkomponente ausbleibt.

### Zeichnungen

Ausführungsbeispiele der Erfindung sind in den Zeichnungen dargestellt und in der nachfolgenden Beschreibung näher erläutert. Es zeigen:
Figur 1: Logische und physikalische Komponenten eines erfindungsgemäßen Übertragungssystems
Figur 2: Mögliche logische Verbindungen im Übertragungssystem
Figur 3: Einfaches Ausführungsbeispiel
Figur 4: Erstes Zeitdiagramm für den Verbindungsaufbau
Figur 5: Zweites Zeitdiagramm für den Verbindungsaufbau
Figur 6: Zeitdiagramm bei einem Reset einer Komponente
Figur 7: Ausführungsbeispiel einer Komponente

### Beschreibung des Ausführungsbeispiels

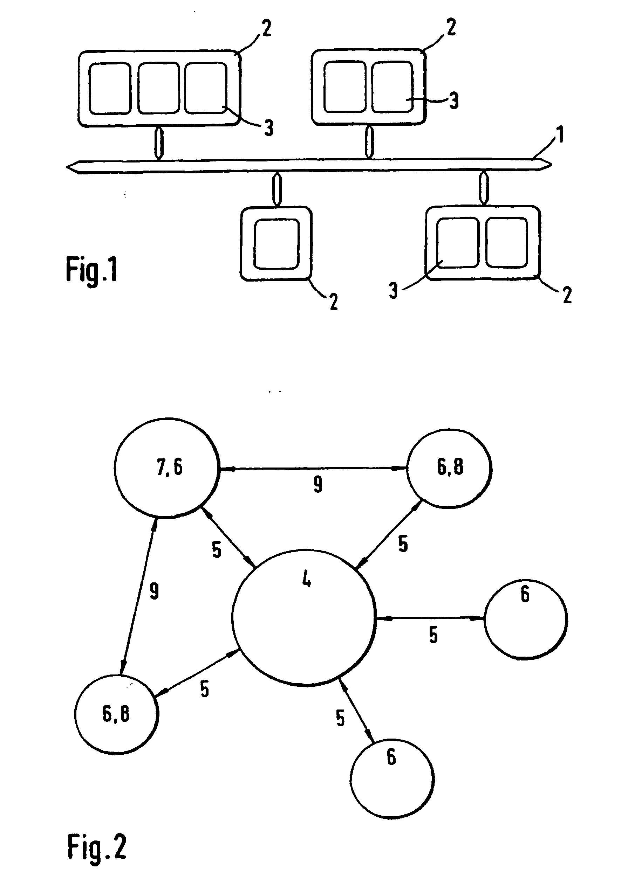

Jede Station besteht nach Fig. 1 vom Konzept her aus dem physisch vorhandenen Gerät ("Physical Device", PD) 2, welches durch genau eine physikalische Schnittstelle zum Netzwerk, zum Bus 1, definiert ist und eine oder mehrere logische Komponenten ("Logical Component", LC) 3 beinhaltet. Beim Aufbau einer Kommunikation zwischen verschiedenen Komponenten eines Übertragungssystems wird zunächst die Kommunikation in den unteren Schichten des ISO-Modells aufgebaut, der physikalischen Schicht, der Data-Link-Schicht und der Netzwerkschicht, darüber die Transportschicht. Das erfindungsgemäßes Verfahren befaßt sich mit der netzweiten Koordination dieser Schichten.
Basis für den Verbindungsaufbau ist ein Übertragungssystem, bei dem sowohl eine Direktadressierung (1:1 Kommunikation) als auch eine Broadcastadressierung (1:N Kommunikation) realisiert werden kann, sowie alle Komponenten im Netzwerk prinzipiell in gleicher physikalischer Weise angeschlossen werden. Erfüllt werden diese Anforderungen z. B. vom Controller Area Network (CAN) nach der DE-PS 35 06 118. Dieses Bussystem ist für Steuer- und Kontrollinformationen gedacht. Audio- oder Videodaten können auch separat übertragen werden.
Die für den Verbindungsaufbau relevante Kommunikationssoftware muß einen verbindungsorientierten Dienst (Punkt-zu-Punkt Verbindung) zwischen den logischen Komponenten unterstützen. Es bietet sich hier die Verwendung eines Transportprotokolls nach DE 41 31 133 an. In dem erfindungsgemäßen Verfahren wird die Funktion der logischen Komponenten in einer Verbindung anhand einer Identifikationsnummer definiert, die für einen Verbindungsaufbau zwischen zwei oder mehreren Komponenten im Header des Datentelegramms gesendet wird. Adressierbar als voneinander unabhängige Funktionseinheiten sind nur die logischen Komponenten 3. Im Gegensatz zu der bisher bekannten Verwendung des CAN-Busses werden durch Aussendung von Identifiern zusätzlich zu den Broadcast-Eigenschaften Punkt-zu-Punkt-Verbindungen zwischen Komponenten hergestellt.

Im Gegensatz zu den bekannten Systemen sind in diesem Konzept die Begriffe ""Master"" und ""Slave"" nicht absolut (in bezug auf eine Station bzw. logische Komponente) definiert. Die Definition der Begriffe ""Master"" und ""Slave"" bezieht sich auf die Punkt-zu-Punkt Verbindungen zwischen zwei logischen Komponenten, von denen genau eine den ""Master"", die andere den ""Slave"" für diese Verbindung darstellt. Da diese Beziehung für jede der vorhandenen Punkt-zu-Punkt Verbindungen prinzipiell unterschiedlich sein kann, wären eigentlich die Begriffe "Verbindungs-"Master"" bzw. "Verbindungs-"Slave"" korrekter. Ein und dieselbe logische Komponente kann demnach durchaus in der einen Verbindung als ""Master", in einer anderen dagegen als ""Slave" auftreten. Die Funktion einer logischen Komponente in einer Verbindung, die ""Master""-Eigenschaften hat, besteht in der Überwachung und indirekten Terminierung einer logischen Verbindung.

Fig. 2 zeigt eine logische Sternstruktur -bestehend aus einzelnen Punkt-zu-Punkt Verbindungen, die quasi beliebig oft innerhalb eines Netzwerkes realisiert werden kann. Die Hauptkomponente 4 hält logische Verbindungen 5 zu ihren Nebenkomponenten 6 aufrecht. Eine der Nebenkomponenten 7 baut aber mit anderen Nebenkomponenten 8 ein direktes Subsystem über die Verbindungen 9 auf. Die Komponente 7 ist somit Hauptkomponente gegenüber 8, aber Nebenkomponente gegenüber 4.

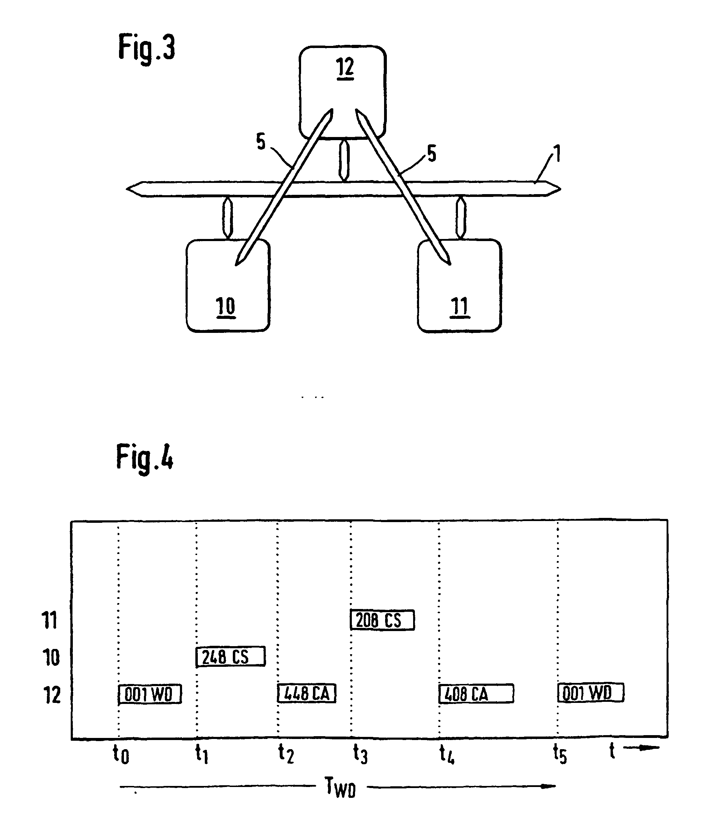

Die Funktionsweise des Verbindungsaufbau soll im folgenden an einem bewußt einfach gehaltenen Beispiel , Fig. 3 näher erläutert werden. Jede logische Komponente ist in einem eigenen Gehäuse untergebracht; für dieses Beispiel gilt demnach LC = PD.
Betrachtet wird ein einfaches System aus einem Navigationsgerät 10, einem CD-Changer 11, sowie einem Anzeige- und Bedienteil 12. In diesen physikalischen Geräten befinden sich die logischen Komponenten NAV, CDC und MAS. In der letztgenannten ist in diesem Beispiel die Benutzerschnittstelle realisiert. Das hierarchische Netzwerk ermöglicht einen saubere Trennung von Kommunikation und Applikation. Somit könnnte der Kommunikations-"Master" in einer Komponente integriert sein, die keine direkte Benutzerschnittstelle beinhaltet. Die Komponente MAS ist der System-"Master", der die Überwachungs- und Terminierungsfunktion bezüglich der gesamten Bedienfunktionalität beinhaltet. Die Komponenten stehen in logischen Verbindungen 5, während sie über den Bus 1 physikalisch verknüpft sind.

Die Kommunikation zwischen den Komponenten wird über zwei Punkt-zu-Punkt Verbindungen abgewickelt, die jeweils durch eine bidirektionale Transportverbindung realisiert werden. Die Komponente MAS 12 stellt für beide Verbindungen den "Master", NAV 10 und CDC 11 jeweils den "Slave" dar. Die Transportverbindungen 5 dieses Ausführungsbeispiels benutzen hierbei die folgenden Data Link Identifier, die über den CAN-Bus gesendet werden:
**MAS <-> NAV** (Punkt-zu Punkt)
Sende-Identifier MAS / Empfangs-Identifier NAV: **0x448**
Sende-Identifier NAV / Empfangs-Identifier MAS: **0x248**
**MAS <-> CDC** (Punkt-zu Punkt)
Sende-Identifier MAS / Empfangs-Identifier CDC: **0x408**
Sende-Identifier CDC / Empfangs-Identifier MAS: **0x208 Connection Watchdog** (Broadcasting)
Sende-Identifier MAS / Empfangs-Identifier NAV und CDC: **0x001**

Die Codierungen sind in Tabelle 1 und 2 dargestellt.
In der Tabelle 1 sind nur die in den Beispielen benutzten logischen Komponenten aufgeführt. Bei diesem Ausführungsbeispiel sind insgesamt 255 Adressen für Komponenten aus dem Bereich der mobilen Kommunikation vorgehalten. Vorgesehen ist dabei eine Aufteilung in Gruppen ähnlicher bzw. identischer Komponenten (letzte Spalte der Tabelle).
Für "Master"-Komponenten ist der Identifier des ausgesendeten Connection Watchdogs identisch mit der jeweiligen "Logical Component Number" (LC Number).

Für das angegebene System sind demnach in der Komponente MAS 12 die Dienste für das "Master" Netzmanagement zu implementieren, in den Komponenten NAV 10 und CDC 11 die Dienste für das "Slave" Netzinanagement, wenn man die Funktion der Komponenten vorab definiert hat. "Main Connections" bezeichnen Verbindungen zwischen dem "Haupt"Master"" (Komponente MAS) und seinen "Slave"s, "Subconnections" solche zwischen Sub"Master"n und ihren "Slave"s.

Aus der Unterscheidung in "Master"" und "Slave" für eine Verbindung resultieren zwei Varianten des Netzmanagements für den Aufbau einer Verbindung.

### a) "Master" Netzmanagement Dienste

Mit der zyklischen Aussendung eines Telegramms ("Connection Watchdog") über einen Broadcast-Kanal des Busses wird nach Initialisierung der "Master"-Komponente begonnen, z.B. wird das durch Betätigung einer Taste durch denn Benutzer ausgelöst. Für jede logische Komponente, die "Slave" bezüglich dieses "Master"s ist, bedeutet dieses Telegramm ein Triggersignal zum Verbindungsaufbau. Der jeweilige "Slave" baut demnach seine Verbindung mit dem durch das Transportprotokoll spezifizierten Verfahren auf. Das Netz bleibt solange aktiviert, wie die logische ""Master""-Komponente Telegramme aussendet. Beim Herunterfahren des Netzwerks beendet der "Master" seine Aussendung des Connection Watchdogs, woraufhin nach einem bestimmten Zeitintervall alle angeschlossenen "Slave"s die jeweilige Verbindung als abgebrochen betrachten (indirekte Terminierung).

Falls erforderlich, kann die "Master"-Applikation mit Hilfe eines zyklischen "Connection Test" Telegramms (optionaler Dienst, im Gegensatz zum Connection Watchdog verbindungsorientiert) den Zustand der Verbindung zum "Slave" überwachen. Dies geschieht, indem die Reaktion auf das ausgesendete Telegramm an den "Slave" überwacht wird. Erfolgt beispielsweise innerhalb einer bestimmten Zeit keine Quittierung durch den "Slave", wird das Connection Test Telegramm wiederholt. Nach einer gewissen Anzahl von erfolglosen Wiederholungen wird die Verbindung als abgebrochen angesehen und der "Master" kann ggf. weitere Maßnahmen treffen.

Der zeitliche Ablauf ist aus Fig. 4 zu entnehmen. Die Komponenten CDC 11 und NAV 10 sind bereits intern initialisiert und bereit zur Kommunikation - anderenfalls ergeben sich geringfügig modifizierte. Zeitabläufe.
- t₀:: Zu diesem Zeitpunkt sind alle Komponenten kommunikationsbereit; die Komponente MAS 12 sendet ihr erstes Connection Watchdog Telegramm (WD) mittels des Identifiers 001.
- t₁:: Als Reaktion auf das Connection Watchdog Telegramm startet die Komponente NAV 10 den Verbindungsaufbau zu MAS 12 mittels eines Connection Setup Telegramms (CS) über den Identifier 248.
- t₂:: Die Komponente MAS 12 hat das CS-Telegramm von NAV 10 empfangen und sendet zur Bestätigung des Verbindungsaufbaus ein Connection Acknowledge Telegramm (CA) mit dem Identifier 448 an NAV 10. Hiernach ist die Transportverbindung MAS <-> NAV betriebsbereit, d.h. alle Dienste zur Übermittlung von Applikationsdaten zwischen diesen beiden Komponenten können benutzt werden.
- t₃:: Wie unter t₁ beschrieben, meldet sich hier die Komponente CDC 11 über den Identifier 208 bei MAS an.
- t₄:: Die Komponente MAS 12 bestätigt den Verbindungsaufbau mittels eines CA-Telegramms über den Identifier 408 an CDC 11. Hiermit ist auch die zweite Verbindung betriebsbereit und damit das gesamte Netzwerk voll zur Kommunikation von Applikationsdaten befähigt.
- t₅:: Nach Ablauf des Watchdog Timers (Zeit T_{WD} nach t₀) wird von MAS erneut ein Connection Watchdog Telegramm gesendet. Da bereits alle Verbindungen aufgebaut sind, wird diesmal kein Verbindungsaufbau mehr bei den "Slave"-Komponenten angestoßen.

### b) "Slave" Netzmanagement Dienste

Beim ersten Empfang des Connection Watchdogs (d.h., die Verbindung ist noch nicht aufgebaut) führt der "Slave" einen Verbindungsaufbau zum "Master" durch (Monitor-Dienst für den Connection Watchdog des zugeordneten "Master"s). In allen anderen Fällen dient der Connection Watchdog zur Timeout-Überwachung der Verbindung zum "Master". Dies bedeutet, daß nach dem Ausbleiben dieses Telegramms und dem Verstreichen einer bestimmten Zeitspanne der "Slave" die Verbindung als abgebrochen betrachtet. Bei einem erneuten Empfang des Connection Watchdog wird dann die Verbindung neu aufgebaut.

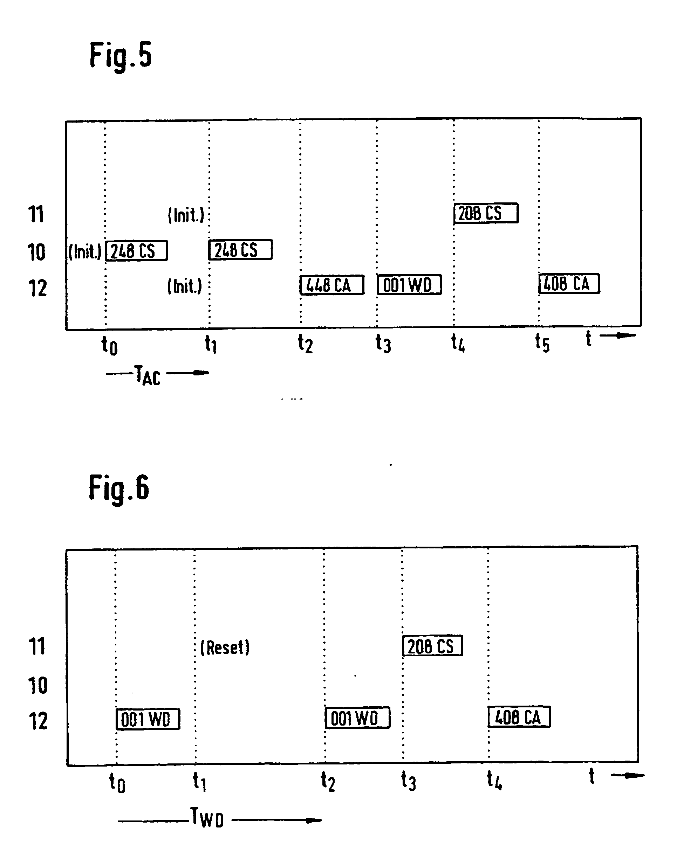

Darüber hinaus existiert für "Master"- bzw. "Slave"-Applikation gleichermaßen die Möglichkeit, je nach Bedarf die Verbindung zur Gegenseite aktiv aufzubauen. Dafür werden die im Transportprotokoll definierten Verbindungsaufbau-Dienste benutzt, die sich nicht hinsichtlich "Master"- und "Slave"-Funktionalität unterscheiden. Erfolgt beispielsweise der Verbindungsaufbau durch einen "Slave" nicht aufgrund eines empfangenen Connection Watchdog Telegramms sondern aufgrund einer Initiative des "Slave"s, so wird anschließend die Kontrolle der Verbindung durch den "Master" mit Aussenden des Connection Watchdog übernommen. Fig. 5 stellt den Fall dar, daß eine Nebenkomponente (Verbindungs-"Slave") das Netzwerk weckt:
- t₀:: Zu diesem Zeitpunkt beginnt die Komponente NAV 10 das Netzwerk mittels eines CS-Telegramms zu wecken. Aufgrund der Aufweckmöglichkeiten des Kommunikationssystems findet daraufhin eine Initialisierung der Komponenten MAS 12 und CDC 11 statt. Ein Empfang des CS-Telegramms ist nach dieser Initialisierung möglich.
- t₁:: Da bislang keine Quittierung auf das CS-Telegramm erfolgte, sorgt der nun ablaufende Timer (T_{AC}) für eine erneute Aussendung durch die Komponente NAV 10.
- t₂:: Die Komponente MAS 12 bestätigt den Verbindungsaufbau zu NAV 10.
- t₃:: Durch die Aussendung des Connection watchdog Telegramms wird das restliche System hochgefahren, der weitere Ablauf entspricht Fall I.

Nach Fig. 6 wird eine Neuinitialisierung im Netz (Reset) vorgenommen.
- t₀:: Zu diesem Zeitpunkt ist das Netz komplett aktiviert, d.h. alle Verbindungen sind eingerichtet.
- t₁:: Die Komponente CDC führt einen Reset durch, ausgelöst z.B. durch einen Spannungseinbruch. Dies hat unter anderem zur Folge, daß die Verbindung zur Komponente MAS unterbrochen ist.
- t₃:: Aufgrund des für die Komponente CDC ersten empfangenen Connection Watchdog Telegramms (nach dem Reset) bei t₂ startet sie die (Wieder-) Anmeldung bei MAS.
- t₄:: Quittierung durch MAS, Verbindung wieder aktiv.

Der zeitliche Verlauf ist identisch, wenn statt eines Resets zur Zeit t₁ ein erstmaliges Hinzufügen der Komponente CDC betrachtet wird. Da das restliche System bereits voll kommunikationsfähig ist, kann man mit dem beschriebenen Mechanismus ein "Nachmelden" von bisher nicht installierten "Slave"-Komponenten während des laufenden Betriebs realisieren.

### Herunterfahren des Netzwerkes

Das Herunterfahren des Netzwerks wird von der "Master"-Komponente MAS 12 initiiert. Durch das Einstellen der Connection Watchdog Aussendungen läuft in den angeschlossenen "Slave"-Komponenten NAV 10 und CDC 11 praktisch gleichzeitig ein Timer zur Überwachung des Watchdogs ab (T_{WDC}). Danach sind alle Verbindungen deaktiviert, ein Datenaustausch über das Netz ist nicht mehr möglich. Weiterhin besteht nun bei entsprechenden Hardwarevoraussetzungen die Möglichkeit, die einzelnen Komponenten in einen Stromspar-Modus zu überführen (Sleep Mode).

Kern der Erfindung ist die Erweiterung der starren "Master"-"Slave" Architektur zu einem hierarchischen System mit beliebig vielen (logischen) Subnetzen. Die Spezifikation dieser Subnetze ist eine "lineare Figur" der Spezifikation des Hauptnetzes, d.h., es werden keine weiteren Dienste für deren Realisierung benötigt. Haupt- und Subnetze besitzen eine logische Sternstruktur, die in ihrer kleinsten Ausführung eine logische Punkt-zu-Punkt Verbindung darstellt. Das hierarchische Netzwerkmanagement ermöglicht eine saubere Strukturierung der Kommunikationssoftware.

Mit dem ersten Erkennen des Connection Watchdogs stellt die "Slave"-Komponente die Verbindung zum "Master" her und meldet sich damit zum ersten Mal bei diesem an. In der "Master"-Komponente wird diese Neuanmeldung vorteilhafterweise durch den Vergleich mit der permanent gespeicherten letzten Systemkonfiguration erkannt und geeignete Maßnahmen ergriffen, wie z. B. Benutzerhinweise auf die neue Funktionalität. Das Fortlassen einer vorher installierten "Slave"-Komponente wird vom "Master" spätestens beim Neustart des Systems erkannt, wiederum durch Vergleich der aktuellen Systemkonfiguration mit der gespeicherten. Der "Master" kann daraufhin entsprechend reagieren, z. B. durch das Weglassen von Bedienmenüs.

Durch den Weckmechanismus der gemeinsamen physikalischen Schicht können immer nur alle Busteilnehmer gleichzeitig "kommunikationsaktiv" sein (die zugehörigen Applikationen können sich dagegen durchaus noch in einem Zustand reduzierter Leistungsaufnahme befinden).
Alle Subsysteme müssen sich die Kanalkapazität von Data Link / Physical Layer teilen.
Im Regelfall wird der (Haupt-) "Master" immer logische Verbindungen zu allen angeschlossenen Komponenten unterhalten. Hierarchisch darunter befinden sich die (dann de facto gleichberechtigten) Subnetze mit gewöhnlicherweise geringerer Ausdehnung. Dies ist jedoch nicht zwingend notwendig, denn das Netzwerkmanagement kann auch für beliebige Konfigurationen beispielsweise mit quasi gleichberechtigten logischen Netzen (verschiedene "Master" auf einer Hierarchiestufe) verwendet werden.

Die Buslast durch das Netzwerkmanagement ist als recht gering anzusehen, da im initialisierten Betrieb des Netzwerks nur die zyklischen Connection Watchdog Telegramme der "Master"- bzw. Sub"Master"-Komponenten erforderlich sind. Damit verbunden ist eine ebenfalls geringe Interrupt-Rate, also eine nur geringfügige zusätzliche Belastung der Rechenkapazität der angeschlossenen Komponenten.

Figur 2 zeigt ein Beispiel für ein komplexeres System, bestehend aus einer Hauptkomponente ("Master") 4, MAS mit 5 Verbindungen (MC, "Main Connnections")5, eine nebengeordnete Hauptkomponente des Subsystems 7, die Komponente NAV mit weiteren 2 Verbindungen (SC, "Subconnections") 9 , zwei Nebenkomponenten CDC 6, GAT 6(nur Verbindungen zu MAS), Nebenkomponenten TMC 6,8, TEL 6,8 (Verbindungen sowohl zu MAS als auch NAV) .

Hinsichtlich des Netzmanagements läßt sich dieses System zunächst als Zusammensetzung von zwei Einfachsystemen nach Fig. 3 beschreiben, d.h. alle dort beschriebenen Verfahren gelten entsprechend. Wesentliche Erweiterungen gegenüber dem Einfachsystem sind durch die zwei "Master"-Komponenten in hierarchischer Ordung (NAV 7 ist "Slave" gegenüber MAS 4) sowie durch die zwei "Slave" Komponenten (TEL 6,8, TMC 6,8), die mehr als einen "Master" haben, gegeben.
Mit wenigen Erweiterungen der definierten Regeln läßt sich ein konsistentes Verhalten in Hinblick auf Hochfahren und Herunterfahren des Netzwerks erreichen.
Im Beispiel ist der "Master" mit der höchsten Hierarchiestufe (MAS) 4 grundsätzlich verantwortlich für das Hochfahren (erstes Aussenden des Connection Watchdogs), sowie das Herunterfahren (Wegnahme des Connection Watchdogs sowie ggf. weitere "Shutdown"-Nachricht an Sub"Master" NAV 10 des gesamten Netzes. Dies bedeutet, daß zunächst das Hauptnetz aktiviert wird (Verbindungen zu MAS 4), anschließend das Subnetz (Verbindungen zu NAV 7). Für das Herunterfahren gilt entsprechendes. Allerdings erlaubt das beschriebene Netzwerkmanagement auch Betriebszustände, in denen der Sub"Master" NAV 7 eigenständig sein Teilnetz aktiviert und wieder deaktiviert (z.B. für einen Datenaustausch mit der Komponente TEL 6,8).

Nebenkomponenten, die mehr als eine Hauptkomponente besitzen (im Beispiel TEL 6,8 und TMC 6,8), haben darauf zu achten, erst nach dem Ausbleiben der Connection Watchdogs von allen "Master"n ihre Applikation in den Stromspar-Modus zu überführen.

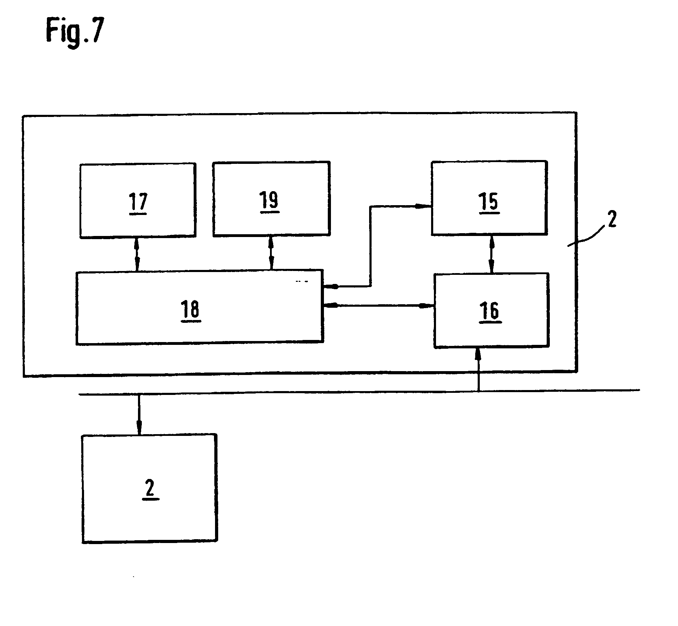

Nach Fig. 7 ist eine Komponente über die Schnittstelle 15 (Protokollbaustein) und der Busankopplung mit Weckmöglichkeit 16 (Transceiver) an den Bus 1 angeschlossen. Die Komponente wird von einem Mikroprozessor 18 überwacht und besitzt einen nichtflüchtigen Speicher 17. Zusätzlich kann ein Baustein zur Bestimmung des Time-Outs 19 in die Komponente eingebaut werden. Zur Einsparung einer separaten Weckleitung sollte jede Station mit geeigneter Bus-Hardware (z. B. spezieller Transceiver-Baustein) ausgerüstet sein, um bei der Erkennung von Busverkehr ein wecksignal zu ihrer eigenen Initialisierung erzeugen zu können. Auf diese Weise kann ein Übergang zwischen Stromspar-Modus und Vollaktivität einer Komponente leicht realisiert werden. Dies ist die eleganteste Möglichkeit eine Komponente zu wecken. Denkbar sind jedoch auch Schaltleitungen mit Mehrfachzugriff (jede Komponente hat ein Schreibrecht auf diese Leitung) oder ähnliche Verfahren.

Zur Unterstützung des Netzmanagements sollten zumindest die komplexeren Geräte (Bedienteil, Navigation, etc.)am besten jedoch alle Komponenten, in der Lage sein, Informationen über die letzte Netzkonfiguration (angeschlossene Komponenten, aktive oder gestörte Verbindungen) dauerhaft, d.h. in einem nichtflüchtigen Speicher 17 wie z. B. EEPROM, zu speichern.

**Tabelle 1**

| **Abkürzung** | **Logische Komponente (LC)** | **LC Nummer (hex)** | **Gruppe LC Nummern (hex)** |
|---|---|---|---|
| MAS | "Master" Unit | 01 | 01-07 |
| CDC | Compact Disc Changer | 08 | 08-0F |
| | | | 10-17 |
| TMC | Traffic Message Channel | 1C | 18-1F |
| | | | 20-27 |
| | | | 28-2F |
| | | | 30-37 |
| | | | 38-3F |
| | | | 40-47 |
| NAV | Navigation Unit | 48 | 48-4F |
| TEL | Telephone | 50 | 50-57 |
| | | | 58-5F |
| | | | 60-67 |
| | | | 68-6F |
| | | | 70-77 |
| | | | 78-7F |
| | | | 80-87 |
| | | | 88-8F |
| | | | 90-97 |
| | | | 98-9F |
| | | | A0-A7 |
| | | | A8-AF |
| | | | B0-B7 |
| | | | B8-BF |
| | | | C0-C7 |
| | | | C8-CF |
| | | | D0-D7 |
| | | | D8-DF |
| | | | E0-E7 |
| | | | E8-EF |
| GAT | Gateway | F0 | F0-F7 |
| | | | F8-FF |

**Tabelle 2**

| **Verbindungs-** "**Master"** | "**Master" CAN Id (hex)** | **Verbindunge- "Slave"** | "**Slave" CAN Id (hex)** |
|---|---|---|---|
| ***a)*** | ***Haupt- Verbindungen*** | | |
| MAS | 408 | CDC | 208 |
| MAS | 41C | TMC | 21C |
| MAS | 448 | NAV | 248 |
| MAS | 450 | TEL | 250 |
| MAS | 4F0 | GAT | 2F0 |
| : | : | : | : |

| ***b)*** | ***Unter- Verbindungen*** | | |
|---|---|---|---|
| NAV | 508 | TMC | 509 |
| NAV | 540 | TEL | 541 |
| : | : | : | : |

## Patentansprüche

1. Verfahren zur Kontrolle der Verbindungen eines Übertragungssystems, insbesondere für den Einsatz in einem Kraftfahrzeug, das eine bidirektionale Übertragungsleitung (1) und mindestens zwei an die Übertragungsleitung angeschlossene, physikalische Komponenten (2) aufweist,
**dadurch gekennzeichnet, daß** die physikalischen Komponenten mindestens eine logische Komponente (3) enthalten und den logischen Komponenten Adressen zugewiesen werden, die ihre Funktion definieren, und daß eine erste logische Komponente (3) die Aufforderung zum Verbindungsaufbau an mindestens eine zweite logische Komponente (3) ausgibt und die zweite logische Komponente (3) die logische Verbindung zur ersten Komponente herstellt, wobei eine der logischen Komponenten eine Überwachungs- und Terminierungsfunktion für diese Verbindung übernimmt.

2. Verfahren zur Kontrolle der Verbindungen eines Übertragungssystems nach Anspruch 1, **dadurch gekennzeichnet, daß** die erste logische Komponente (3) die Überwachungs- und Terminierungsfunktion für diese Verbindung übernimmt.

3. Verfahren zur Kontrolle der Verbindungen eines Übertragungssystems nach Anspruch 1, **dadurch gekennzeichnet, daß** die zweite logische Komponente (3) die Überwachungs- und Terminierungsfunktion für diese Verbindung übernimmt.

4. Verfahren zur Kontrolle der Verbindungen eines Übertragungssystems nach Anspruch 1 bis 3, **dadurch gekennzeichnet, daß** die Initialisierung des Übertragungssystems über eine logische Komponente durch das Senden einer Sendekennung erreicht wird.

5. Verfahren zur Kontrolle der Verbindungen eines Übertragungssystems nach Anspruch 1 bis 4, **dadurch gekennzeichnet, daß** jede logische Verbindung im Übertragungssystem durch zyklische Aussendung von Telegrammen in einer Verbindung aufrechterhalten werden.

6. Verfahren zur Kontrolle der Verbindungen eines Übertragungssystems nach Anspruch 1 bis 5, **dadurch gekennzeichnet, daß** die physikalischen Verbindungen im Übertragungssystem durch zyklisches Aussenden von Test-Telegrammen überwacht wird.

7. Verfahren zur Kontrolle der Verbindungen eines Übertragungssystems nach Anspruch 1 bis 6, **dadurch gekennzeichnet, daß** das Übertragungssystem in einen Schlafmodus überführt wird, wenn innerhalb einer vorgegebene Zeit keine Telegramme auf den Übertragungsleitungen auftreten.

8. Physikalische Komponente zur Durchführung des Verfahrens nach einem der Ansprüche 1 bis 7 mit mindestens einer logischen Komponente, mit einem Schnittstellenbaustein (15) zum Anschluß an die Verbindungsleitung (1) zwischen weiteren Komponenten (2) und einem in der logischen Einheit angeordneten Mikroprozessor (18) sowie einem mit dem Mikroprozessor in Verbindung stehenden nichtflüchtigen Speicher (17), **dadurch gekennzeichnet, daß** im Speicher eine Datei hinterlegt ist, die der Komponente für einen bestimmten Verbindungsaufbau vorschreibt, ob die Komponente in dieser Verbindung die Überwachungs- und Terminierungsfunktion wahrnimmt.

9. Komponente nach Anspruch 8, **dadurch gekennzeichnet, daß** Komponenten (2) einen nichtflüchtigen Speicher (17) für Konfigurationsdaten des Übertragungssystems besitzen.

10. Komponente nach Anspruch 8 oder 9, **dadurch gekennzeichnet, daß** die Komponente (2) für Wahrnehmung von Überwachungsaufgaben für logische Verbindungen ausgelegt ist.

11. Komponente nach Anspruch 8 bis 10, **dadurch gekennzeichnet, daß** die Komponenten (2) eine Einrichtung (19) zur zeitlichen Überwachung der zyklischen Telegramme besitzen, die beim Ausbleiben der Telegramme die Komponente in einen leistungsreduzierten Betriebszustand versetzt.

12. Komponente nach Anspruch 8 bis 11, **dadurch gekennzeichnet, daß** die Komponenten zwischen mehreren Betriebszuständen mit reduzierten Energieverbrauch umschaltbar sind.

## Claims

1. Method for the supervision of the connections of a transmission system, in particular for use in a motor vehicle, which has a bidirectional transmission line (1) and at least two physical components (2) connected to the transmission line,
**characterized in that** the physical components contain at least one logical component (3) and the logical components are allocated addresses which define their function, and **in that** a first logical component (3) outputs the request for connection set-up to at least one second logical component (3) and the second logical component (3) establishes the logical connection to the first component, one of the logical components performing a monitoring and termination function for said connection.

2. Method for the supervision of the connections of a transmission system according to Claim 1, **characterized in that** the first logical component (3) performs the monitoring and termination function for said connection.

3. Method for the supervision of the connections of a transmission system according to Claim 1, **characterized in that** the second logical component (3) performs the monitoring and termination function for said connection.

4. Method for the supervision of the connections of a transmission system according to Claims 1 to 3, **characterized in that** the initialization of the transmission system is achieved by means of a logical component by the transmission of a transmission identifier.

5. Method for the supervision of the connections of a transmission system according to Claims 1 to 4, **characterized in that** each logical connection in the transmission system is maintained by cyclic transmission of messages in a connection.

6. Method for the supervision of the connections of a transmission system according to Claims 1 to 5, **characterized in that** the physical connections in the transmission system are monitored by cyclic transmission of test messages.

7. Method for the supervision of the connections of a transmission system according to Claims 1 to 6, **characterized in that** the transmission system is transferred into a sleep mode if no messages occur on the transmission lines within a predefined time.

8. Physical component for carrying out the method according to one of Claims 1 to 7 having at least one logical component, having an interface module (15) for connection to the connection line (1) between further components (2) and a microprocessor (18) arranged in the logical unit and also a non-volatile memory (17) connected to the microprocessor, **characterized in that** the memory stores a file that prescribes for the component for a specific connection set-up whether the component in this connection performs the monitoring and termination function.

9. Component according to Claim 8, **characterized in that** components (2) have a non-volatile memory (17) for configuration data of the transmission system.

10. Component according to Claim 8 or 9, **characterized in that** the component (2) is designed for observation of monitoring tasks for logical connections.

11. Component according to Claims 8 to 10, **characterized in that** the components (2) have a device (19) for temporal monitoring of the cyclic messages, which puts the component into a power-reduced operating state in the event of the messages failing to appear.

12. Component according to Claims 8 to 11, **characterized in that** the components can be changed over between a plurality of operating states with reduced energy consumption.

## Revendications

1. Procédé de contrôle des liaisons d'un système de transmission, notamment pour utilisation dans un véhicule automobile, qui comprend une ligne de transmission (1) bidirectionnelle et au moins deux composants physiques (2) raccordés à la ligne de transmission,
**caractérisé en ce que**
les composants physiques contiennent au moins un composant logique (3) et aux composants logiques sont attribuées des adresses qui définissent leurs fonctions, un premier composant logique (3) délivrant la demande d'établissement d'une liaison avec au moins un second composant logique (3) et ce composant (3) établissant la liaison logique avec le premier composant, un des composants logiques assumant une fonction de surveillance et de limitation dans le temps de cette liaison.

2. Procédé de contrôle des liaisons d'un système de transmission selon la revendication 1,
**caractérisé en ce que**
le premier composant logique (3) assume la fonction de surveillance et de limitation dans le temps de cette liaison.

3. Procédé de contrôle des liaisons d'un système de transmission selon la revendication 1,
**caractérisé en ce que**
le second composant logique (3) assume la fonction de surveillance et de limitation dans le temps de cette liaison.

4. Procédé de contrôle des liaisons d'un système de transmission selon une des revendications 1 à 3,
**caractérisé en ce que**
l'initialisation du système de transmission est assurée par un composant logique par l'émission d'une identification d'émission.

5. Procédé de contrôle des liaisons d'un système de transmission selon une des revendications 1 à 4,
**caractérisé en ce que**
chaque liaison logique dans le système de transmission est maintenue par émission cyclique de télégrammes dans une liaison.

6. Procédé de contrôle des liaisons d'un système de transmission selon une des revendications 1 à 5,
**caractérisé en ce que**
les liaisons physiques dans le système de transmission sont surveillées par émission cyclique de télégrammes de contrôle.

7. Procédé de contrôle des liaisons d'un système de transmission selon une des revendications 1 à 6,
**caractérisé en ce que**
le système de transmission passe en mode de veille quand, pendant un temps prédéterminé, aucun télégramme n'est envoyé sur les lignes de transmission.

8. Composant physique pour la mise en oeuvre du procédé selon les revendications 1 à 7, comprenant au moins un composant logique, un composant d'interface (15) pour raccordement à la ligne de liaison (1) entre d'autres composants (2), un microprocesseur (18) monté dans l'unité logique, ainsi qu'une mémoire non volatile en liaison avec le microprocesseur,
**caractérisé en ce que**
dans la mémoire est enregistré un fichier qui prescrit le composant pour l'établissement d'une liaison définie, si le composant dans cette liaison assure la fonction de surveillance et de limitation dans le temps.

9. Composant selon la revendication 8,
**caractérisé en ce que**
des composants (2) possèdent une mémoire non volatile (17) pour des données de configuration du système de transmission.

10. Composant selon la revendication 8 ou 9,
**caractérisé en ce que**
le composant (2) est conçu pour assurer des opérations de surveillance pour des liaisons logiques.

11. Composant selon les revendications 8 à 10,
**caractérisé en ce que**
les composants (2) possèdent un dispositif (19) pour la surveillance dans le temps des télégrammes cycliques et qui, en l'absence de télégrammes, fait passer le composant à un état de fonctionnement à puissance réduite.

12. Composant selon les revendications 8 à 11,
**caractérisé en ce que**
les composants peuvent être commutés entre plusieurs états de fonctionnement à consommation d'énergie réduite.
